# EUROPÄISCHE PATENTANMELDUNG

(11) **EP 4 821 756 A1**
(43) Veröffentlichungstag der Anmeldung: **14.10.2026**
(21) Anmeldenummer: 26171578.3
(22) Anmeldetag: 10.04.2026
(51) Int. Cl.: B60N 2/70

(54) **SITZPOLSTERANORDNUNG UND FAHRZEUGSITZ**

(30) Priorität: 10.04.2025 DE 102025114188
(71) Anmelder: Adient US LLC, Plymouth, MI 48170 (US)
(72) Erfinder: GILMORE, Bernard, 51399 Burscheid (DE)
(74) Vertreter: Liedtke & Partner Patentanwälte

(57) **Zusammenfassung**

Die Erfindung betrifft eine Sitzpolsteranordnung (200), insbesondere für einen Fahrzeugsitz (100), zumindest umfassend
- ein Sitzpolsterelement (202) mit einer zumindest annähernd horizontalen Sitzfläche (204), das mindestens eine in der Sitzfläche (204) angeordnete Ausnehmung (206) aufweist, und
- eine Stützanordnung (215), wobei
die Stützanordnung (215) mindestens ein ergonomisch geformtes Entlastungselement (210) umfasst, das zumindest in Vertikalrichtung (z) beweglich in der mindestens einen Ausnehmung (206) des Sitzpolsterelements (202) gelagert ist.

Die Erfindung betrifft zudem einen Fahrzeugsitz (100) mit einer derartigen Sitzpolsteranordnung (200).

## Beschreibung

Die Erfindung betrifft eine Sitzpolsteranordnung, insbesondere für einen Fahrzeugsitz, sowie einen Fahrzeugsitz.

### Stand der Technik

US 9 802 521 B2 offenbart einen mehrschichtigen Fahrzeugsitz mit aufblasbaren Luftblasen zum Einstellen der Festigkeit eines Sitzpolsters und einer Rückenlehne. Eine Fahrzeugsitzanordnung umfasst eine mehrschichtige Anordnung, die weiterhin eine Federungsschicht mit abstimmbaren Federn, eine flexible Platte, die von der Federungsschicht getragen wird, eine Blasenanordnung, die auf der flexiblen Platte angeordnet ist, eine dünne Schaumstoffschicht, die über der Blasenanordnung angeordnet ist, und einen rahmengestützten Träger, in dem die Federungsschicht eingebettet ist.

US 10 286 818 B2 offenbart eine Fahrzeugsitzanordnung mit einer Rückenlehne und einer Sitzfläche. Die Sitzfläche ist funktional mit der Rückenlehne verbunden. Die Sitzbasis umfasst eine erste Federungsbaugruppe. Die erste Federungsbaugruppe umfasst ein Federungselement, das funktional mit einer Sitzfläche verbunden ist, eine oder mehrere einstellbare Federn, die über der Sitzfläche angeordnet sind, flexible Seitenwangen der Sitzfläche, eine Sitzpolsteranordnung, die über dem Federungselement angeordnet ist, und gelenkige Sitzseitenwangen der Sitzpolsteranordnung. Die Sitzbasis umfasst außerdem eine zweite Federungsbaugruppe. Die zweite Federungsbaugruppe umfasst eine Mehrzahl unabhängiger Oberschenkelstützen, die funktional mit einem vorderen Teil der Sitzfläche verbunden sind.

US 9 108 553 B2 offenbart eine Fahrzeugsitzaufhängungsbaugruppe, die eine hintere Stütze zum Eingriff mit einem Torsionsrohr eines Fahrzeugsitzes aufweist. Endabschnitte von ersten und zweiten Federelementen sind mit der hinteren Stütze verbunden. An jedem der ersten und zweiten Federelemente sind Zwischenpolsterschalen-Verbindungsstücke angeordnet. Eine Querstrebe ist mit dem ersten und zweiten Federelement gekoppelt und weist Öffnungen für die Stromverkabelung und Datenverkabelung auf.

US 2010/237082 A1 offenbart ein Pad mit einer Schicht aus elastischem Gel, die auf einer Schaumstoffschicht angeordnet ist. Die Gelschicht des Pads kann geometrische Aussparungen wie Falten, Rillen, Riffelungen, Wellen, eine gezackte Form oder eine beliebige Kombination davon aufweisen. Die geometrischen Ausschnitte können rund, quadratisch, trapezförmig, dreieckig, rechteckig, rechteckig mit abgerundeten Ecken, halbrund oder in einer beliebigen Kombination vorliegen. Die geometrischen Aussparungen können auch hohl sein, um den Gelanteil weiter zu reduzieren. Die Form der Gelschicht kann sich von der Form etwaiger Zacken oder geometrischer Ausschnitte in der Schaumschicht unterscheiden oder davon unabhängig sein. Darüber hinaus kann die Schaumstoffschicht des Polsters eine geometrische Form aufweisen und geometrische Aussparungen, beispielsweise eine gezackte, gefaltete, gerillte, geriffelte, gewellte Form oder eine beliebige Kombination davon, besitzen. Die geometrischen Ausschnitte können rund, quadratisch, trapezförmig, dreieckig, rechteckig, rechteckig mit abgerundeten Ecken, halbrund oder in einer beliebigen Kombination vorliegen. Um den Schaumanteil weiter zu reduzieren, können die geometrischen Aussparungen auch hohl sein. Die Gelschicht kann mit der Schaumschicht verschmolzen, verklebt oder mitgeformt werden. Die Schichten können so kombiniert oder verbunden werden, dass sich flache Oberflächen auf flachen Oberflächen, gezackte Oberflächen auf gezackten Oberflächen (zum Beispiel verschachtelt oder ineinandergreifend) oder gezackte Oberflächen auf flachen Oberflächen ergeben. Alle diese Kombinationen bieten dem Endbenutzer unterschiedliche Grade der Unterstützung und Dämpfung. Darüber hinaus ist es möglich, auf beiden Seiten unterschiedliche Polstereffekte oder Stützeffekte anzubieten und so eine Wendefunktion des Polsters zu ermöglichen, um dem vom Benutzer gewünschten Stützgrad und Komfort gerecht zu werden. Auch die Bezüge der Matte können unterschiedliche Farben und Strukturen aufweisen.

US 2017/065085 A1 offenbart ein verbessertes Sitzkissen aus Schaumstoff, das ergonomisch geformt ist und mit einer Kerbe zum Erleichtern des richtigen Sitzens und zur potentiellen Zentrierung auf einem Sitz sowie mehreren durch das Kissen verlaufenden Kanälen zur Kühlung ausgestattet ist. In einigen Fällen verfügt das Schaumstoff-Sitzkissen über beidseitig angebrachte Griffe und kann zum einfachen Transport in der Mitte zusammengefaltet werden. In einigen weiteren Beispielen umfasst das Schaumstoff-Sitzkissen eine Polsterschicht, die über der Schaumstoffschicht angeordnet ist. Das Sitzkissen aus Schaumstoff besteht aus einer Schaumschicht mit einer Oberseite, einer Unterseite, einer ersten Vorderseite, einer ersten Rückseite und mehreren Randseiten; es weist eine Kerbe auf, die ungefähr in der Mitte der ersten Rückseite angeordnet ist, zwischen der Oberseite und Unterseite der Schaumstoffschicht verläuft und sich von der ersten Rückseite in Richtung Mitte der Schaumstoffschicht erstreckt, um die Schaumstoffschicht teilweise zu halbieren und eine Kerbenseite senkrecht zur Oberseite und Unterseite zu erzeugen; eine Vielzahl von Kanälen, die durch die Schaumschicht verlaufen, mit Öffnungen auf der Oberseite und Unterseite; und eine luftdurchlässige und feuchtigkeitsdurchlässige, abnehmbare, passgenaue Abdeckung mit mindestens einem Fach zum Einschließen der Schaumstoffschicht.

Aus der WO 01/28388 A1 ist zur Vermeidung von Sitzschmerzen ein Sitz mit verschiedenen Hilfssitzkissen bekannt.

### Aufgabe

Der Erfindung liegt die Aufgabe zu Grunde, eine Sitzpolsteranordnung der eingangs genannten Art zu verbessern, insbesondere so zu gestalten, dass bei der Benutzung der Sitzpolsteranordnung durch einen darauf sitzenden Benutzer der Maximaldruck an der Oberfläche reduziert, die Gesamtkontaktfläche vergrößert und der durchschnittliche Druck an der Oberfläche des Sitzpolsterelements verringert wird, sowie einen entsprechenden Fahrzeugsitz bereitzustellen.

### Lösung

Diese Aufgabe wird erfindungsgemäß gelöst durch eine Sitzpolsteranordnung, die insbesondere für einen Fahrzeugsitz geeignet ist, und die zumindest Folgendes umfasst:
- ein Sitzpolsterelement, das eine zumindest annähernd horizontale Sitzfläche und mindestens eine in der Sitzfläche angeordnete Ausnehmung aufweist, und
- eine Stützanordnung, wobei die Stützanordnung mindestens ein Stützelement, das als eine Aufhängungsmatte ausgebildet ist, die unterhalb des Sitzpolsterelements angeordnet ist, und mindestens ein, insbesondere ergonomisch geformtes, Entlastungselement umfasst, das zumindest in Vertikalrichtung beweglich in der mindestens einen Ausnehmung des Sitzpolsterelements gelagert ist.

Dabei beziehen sich die Bezeichnungen "horizontal" und "vertikal" auf ein kartesisches Koordinatensystem, in dem die x-Achse aus der Sicht eines Benutzers der Sitzpolsteranordnung eine Längsrichtung bezeichnet, die y-Achse eine Querrichtung und die z-Achse eine Vertikalrichtung. Damit ist die x-y-Ebene eine horizontale Ebene.

Erfindungsgemäß wird eine Ausnehmung in dem Sitzpolsterelement vorgesehen oder in das Sitzpolsterelement eingebracht und in der Ausnehmung wird das Entlastungselement angeordnet. Das Entlastungselement ist insbesondere ergonomisch geformt, das heißt, es ist so geformt und so in der Sitzfläche platziert, dass es an den Stellen wirken kann, an denen bei der Benutzung einer herkömmlichen Sitzpolsteranordnung durch einen menschlichen Benutzer ein erhöhter Druck auf den Körper des Benutzers ausgeübt wird. Diese Stellen sind insbesondere diejenigen, an denen die Sitzbeinhöcker auf die Sitzfläche drücken, oder/und die Stelle unterhalb des Steißbeins.

Das Entlastungselement ist erfindungsgemäß in der Ausnehmung vertikal beweglich, das heißt, es kann einem in senkrechter z-Richtung aufgebrachten Druck ausweichen. Insbesondere kann das Entlastungselement entweder durch Verformung des Entlastungselements, beispielsweise durch Kompression oder/und durch Durchbiegung, oder durch eine abwärts gerichtete Ausweichbewegung des Entlastungselements, oder durch eine Kombination einer Verformung und einer Ausweichbewegung dem in z-Richtung (auch vertikale Richtung oder senkrechte Richtung genannt) aufgebrachten Druck ausweichen.

Dadurch, dass das Entlastungselement insbesondere ergonomisch geformt ist, und dadurch, dass das Entlastungselement in der Ausnehmung des Sitzpolsterelements vertikal beweglich angeordnet ist, ist es möglich, einen Sitz, beispielsweise einen Fahrzeugsitz, mit einer separaten lasttragenden Komponente im Bereich der maximalen Tragfähigkeit des Sitzkissens (das heißt unter den Sitzbeinhöckern) auszustatten. Diese Komponente wird vorteilhaft so bemessen und positioniert, dass sie für alle Körpergrößen von P05 weiblich bis P95 männlich geeignet ist. Funktionell wird diese Komponente dazu beitragen, den Spitzendruck an der Kontaktfläche zu reduzieren (bis zu 30 %), die gesamte Kontaktfläche zu vergrößern und den durchschnittlichen Druck an der Kontaktfläche auf der Oberseite des Sitzkissens zu reduzieren.

Zusätzlich ist das mindestens eine Stützelement als eine Aufhängungsmatte, insbesondere als eine elastische Stützhalterung, ausgebildet und unterhalb des Sitzpolsterelements angeordnet. Insbesondere ist die Aufhängungsmatte derart elastisch oder flexibel ausgebildet, dass das Sitzpolsterelement im ganzen relativ bewegbar, insbesondere nachgiebig, elastisch oder federnd, ausgebildet ist.

Vorteilhafte Ausgestaltungen, welche einzeln oder in Kombination miteinander eingesetzt werden können, sind Gegenstand der Unteransprüche.

Bei einer Sitzpolsteranordnung der vorgeschlagenen Art kann vorgesehen sein, dass die Ausnehmung beispielsweise als eine Vertiefung der Sitzfläche des Sitzpolsterelements ausgeführt ist. In einer alternativen Ausgestaltung kann vorgesehen sein, dass sich die Ausnehmung im Sitzpolsterelement in der Vertikalrichtung zumindest bereichsweise oder vollständig erstreckt. Zum einen ist durch eine vollständige Erstreckung der Ausnehmung eine größere Vertikalbewegung des Entlastungselements ermöglicht, zum anderen kann das Entlastungselement auf diese Weise durch eine von der Unterseite des Sitzpolsterelements ausgehende Rückstellkraft, die beispielsweise von einem Federelement erzeugt werden kann, wieder vertikal aufwärts bewegt werden, wenn das Entlastungselement nicht mehr von der Sitzfläche her belastet wird.

Darüber hinaus kann eine Variante eine doppelte Schaumstoffhärte und doppelte Schaumstoffdichte vorsehen, bei der die Ausnehmung oder Vertiefung nicht vollständig in das Sitzpolsterelement eindringt oder sich nicht vollständig in dieses hineinerstreckt. In diesem Fall kann das Entlastungselement zusätzlich über lokale Rippen und/oder Streben am Sitzpolsterelement befestigt sein.

In einer vorteilhaften Ausgestaltung der erfindungsgemäßen Sitzpolsteranordnung kann alternativ oder zusätzlich vorgesehen sein, dass das mindestens eine Entlastungselement in einer Draufsicht auf die Sitzfläche des Sitzpolsterelements eine zumindest annähernd 8-förmige Außenkontur aufweist und in einer korrespondierenden, zumindest annähernd 8-förmigen Ausnehmung des Sitzpolsterelements angeordnet ist. Der hier verwendete Begriff einer 8-förmigen Kontur bezieht sich dabei auf eine geometrische Form, die an die Ziffer 8 erinnert. Alternativ kann das Entlastungselement auch die Form einer Schleife oder die Form eines Schmetterlings oder Vogels aufweisen, wobei die Flügel vorzugsweise oval ausgebildet sind und sich weiter nach hinten oder nach vorne erstrecken. Es sind auch weitere alternative Formen für das Entlastungselement möglich.

Eine solche geometrische Form kann beispielsweise dadurch entstehen, dass zwei kreisförmige oder ovale Formen durch einen schmalen Verbindungsabschnitt miteinander verbunden werden, oder dass zwei kreisförmige Formen oder ovale Formen relativ zueinander so positioniert werden, dass sie einander teilweise überschneiden. Eine solche 8-förmige oder schleifenförmige Außenkontur als Form eines Entlastungselements ist insbesondere dafür geeignet, zwei durch hohen Druck belastete Areale, beispielsweise die Auflagepunkte der beiden Sitzbeinhöcker einer Person auf der Sitzfläche des Sitzpolsterelements und deren Umgebung, wirksam zu entlasten, wenn die Sitzfläche in diesen Arealen durch ein 8-förmiges oder schleifenförmiges Entlastungselement gebildet ist, das vertikal beweglich ist. Damit in der Sitzfläche des Sitzpolsterelements keine unerwünschten Lücken entstehen, weist die in dem Sitzpolsterelement angeordnete Ausnehmung vorteilhaft ebenfalls eine 8-förmige Kontur auf, deren Größe ungefähr der des Entlastungselements entspricht.

In einem weiteren Beispiel kann vorgesehen sein, dass die Seitenflanken des Entlastungselements gerade verlaufen. Korrespondierend kann die Ausnehmung im Sitzpolsterelement eine gerade Innenwandung aufweisen. Dabei sind die Seitenflanken des Entlastungselements parallel zur Innenwandung der Ausnehmung angeordnet. Alternativ kann das mindestens eine Entlastungselement schräge Seitenflanken aufweisen, wodurch sich das Entlastungselement nach unten hin verjüngt, und die Ausnehmung des Sitzpolsterelements korrespondierende schräge Seitenflanken aufweist. Durch die Verjüngung des Entlastungselements und der Ausnehmung nach unten hin wird der vertikalen Abwärtsbewegung des Entlastungselements ein Widerstand entgegengesetzt, der ein Durchrutschen des Entlastungselements verhindert. Aufgrund der elastischen Eigenschaften von Sitzpolsterelement und Entlastungselement bleibt die durch den Druck, der unter Last von oben auf das Entlastungselement wirkt, verursachte Relativbewegung des Entlastungselements gegenüber dem Sitzpolsterelement jedoch weiterhin möglich.

Das Entlastungselement kann beispielsweise aus einem elastischen, insbesondere offenporigen, Schaumstoff bestehen. Alternativ kann das Entlastungselement als ein mit einem elastischen, insbesondere offenporigen, Kunststoffschaum gefülltes Kissen oder als ein mit Flüssigkeit gefülltes Kissen oder als ein mit Gel gefülltes Kissen ausgeführt sein. Ein solches Kissen kann beispielsweise ein gasdichtes und flüssigkeitsdichtes Hüllelement aufweisen, in welchem der Kunststoffschaum oder die Flüssigkeit oder das Gel angeordnet ist. Besonders vorteilhaft kann vorgesehen sein, dass ein in dem Kissen herrschender Innendruck bedarfsweise variabel einstellbar ist, beispielsweise indem in das Hüllelement Luft eingeblasen wird oder aus dem Hüllelement Luft abgesaugt oder abgelassen wird. Dadurch können die Härte und die Höhe des Entlastungselements bedarfsweise beispielsweise an das Gewicht eines Benutzers angepasst werden.

Zusätzlich kann vorgesehen sein, dass die jeweilige mit Kunstschaum gefüllte Variante entweder teilweise evakuiert oder aufgeblasen werden kann und/oder dass bei der jeweiligen mit Flüssigkeit gefüllten Variante das Volumen oder der Druck des Kissens oder Hüllelements je nach Bedarf erhöht oder verringert werden kann.

Außerdem kann, insbesondere bei einem Entlastungselement aus Schaumstoff, vorteilhaft vorgesehen sein, dass das Entlastungselement eine höhere oder niedrigere Dichte aufweist als das Sitzpolsterelement. Auch kann vorgesehen sein, dass das Entlastungselement eine höhere oder niedrigere Härte als das Sitzpolsterelement aufweist.

In einer weiteren beispielhaften Ausgestaltung der erfindungsgemäßen Sitzpolsteranordnung kann vorgesehen sein, dass die Sitzpolsteranordnung ein unter dem Sitzpolsterelement angeordnetes, zumindest annähernd horizontal erstrecktes Stützelement aufweist. Insbesondere kann die Aufhängungsmatte als ein flächiges Stützelement ausgebildet sein und eine elastische Stützhalterung für das Sitzpolsterelement bilden. Eine erste Aufhängungsmatte kann beispielsweise als ein Federboden ausgebildet sein. Eine zweite Aufhängungsmatte kann beispielsweise als eine flächig aufgespannte, flexible Membran, insbesondere eine flexible Textilmatte, eine flexible Kunststoffmatte oder dergleichen, ausgebildet sein. Dabei kann die Stützanordnung nur die erste Aufhängungsmatte, nur die zweite Aufhängungsmatte oder beide Aufhängungsmatten umfassen, die insbesondere übereinander angeordnet sind. Das jeweilige als Aufhängungsmatte ausgebildete Stützelement oder beide als Aufhängungsmatten ausgebildeten Stützelemente sind insbesondere eingerichtet, das Sitzpolsterelement und das Entlastungselement in Vertikalrichtung, insbesondere flächig federnd, zu stützen.

Das Stützelement, insbesondere die erste Aufhängungsmatte, kann beispielsweise einen Federboden, insbesondere eine Anordnung von Draht-Federelementen, umfassen. Vorteilhaft kann das Stützelement alternativ oder zusätzlich eine horizontal, das heißt zumindest annähernd in einer x-y-Ebene, aufgespannte, flexible Membran, insbesondere als zweite Aufhängungsmatte, umfassen, die beispielsweise aus einem Gewebe, einem Kunststoff oder einer Kombination eines Gewebes mit einem Kunststoff hergestellt sein kann. Das jeweilige Stützelement ist so angeordnet und ausgestaltet, dass es das Sitzpolsterelement und das Entlastungselement in der Vertikalrichtung stützt. Je nach Aufbau der Sitzpolsteranordnung kann diese auch nur eine der Aufhängungsmatten, entweder nur die erste Aufhängungsmatte oder nur die zweite Aufhängungsmatte, umfassen. Ist nur die zweite Aufhängungsmatte vorgesehen, die als eine flächig aufgespannte, flexible Membran ausgebildet ist, dann weist die Sitzpolsteranordnung eine geringere Dicke auf als eine Sitzpolsteranordnung, welche nur die erste Aufhängungsmatte aufweist, die als Federboden ausgebildet ist.

Eine Weiterbildung sieht vor, dass das jeweilige Stützelement mindestens eine Aussparung aufweist. Auch kann das jeweilige Stützelement ohne Aussparung ausgebildet sein und eine durchgehende Fläche aufweisen. Insbesondere kann das jeweilige Stützelement in einem Sitzbeinhöckerbereich zumindest eine erste Aussparung und in einem Steißbeinbereich zumindest eine zweite Aussparung aufweisen. Beispielsweise kann die erste Aussparung mindestens eine Durchgangsöffnung, insbesondere eine 8-förmige oder schleifenförmige, Durchgangsöffnung oder zwei kreisförmige oder ovale, voneinander beabstandete Durchgangsöffnungen, umfassen. Die zweite Aussparung kann beispielsweise als ein kegelförmiger, dreiecksförmiger, u-förmiger oder halbkreisförmiger Ausschnitt, als ein Langloch oder dergleichen ausgebildet sein. Insbesondere kann die zweite Aussparung senkrecht zu den beiden Durchgangsöffnungen ausgebildet sein. Auch kann die zweite Aussparung mittig zu einer Längsachse der Aufhängungsmatte angeordnet sein. Dabei können die beiden Durchgangsöffnungen beabstandet zu der Längsachse und in einer Linie angeordnet sein.

Darüber hinaus kann das jeweilige Stützelement eine erste, zum Beispiel eine vordere, Befestigungseinheit und eine zweite, zum Beispiel hintere, Befestigungseinheit sowie einen dazwischenliegenden flexiblen Stützbereich umfassen. Beispielsweise kann die jeweilige Befestigungseinheit sich jeweils über eine Breite der Aufhängungsmatte erstrecken. Alternativ kann sich die jeweilige Befestigungseinheit seitlich erstrecken, so dass das Stützelement quer montiert werden kann.

Beispielhaft kann dabei weiter vorgesehen sein, dass das Stützelement im Bereich der mindestens einen Ausnehmung des Sitzpolsterelements eine Aussparung aufweist. Aussparungen in diesem Sinne können insbesondere als Durchbrüche des Stützelements ausgeführt sein. Beispielhaft sind solche Durchbrüche kleiner als das darüber angeordnete Entlastungselement. Verschiedene Kombinationen von Löchern oder Ausschnitten in der Matte ermöglichen die Druckentlastung verschiedener Knochenvorsprünge.

Die Aufgabe wird erfindungsgemäß zudem gelöst durch einen Fahrzeugsitz mit einem Sitzteil und einer Rückenlehne, bei dem das Sitzteil eine erfindungsgemäße Sitzpolsteranordnung aufweist.

Es wird ein Fahrzeugsitz vorgeschlagen, der durch ein in ein Sitzpolsterelement eingefügtes, vertikal bewegliches Entlastungselement, das beispielsweise ein speziell entwickeltes 8-förmiges oder schleifenförmiges, Schaumelement sein kann, den insbesondere auf Knochenvorsprünge eines Benutzers aus lokaler Gewichtsbelastung resultierenden Druck, insbesondere unter den Sitzbeinhöckern oder/und unter dem Steißbein eines Benutzers, reduziert.

In bestimmten Ausgestaltungen kann unter dem Sitzpolsterelement eine dünne Membran-Aufhängungsmatte oder Folien-Aufhängungsmatte und/oder ein Federboden als Stützelement angeordnet sein. In weiteren Ausgestaltungen kann das jeweilige Stützelement ein Loch oder verschiedene Kombinationen von Löchern oder Ausschnitten aufweisen, die den Druck auf verschiedene Knochenvorsprünge eines Benutzers verringern können. Insbesondere kann unterhalb des Sitzpolsterelements entweder die erste Aufhängungsmatte oder die zweite Aufhängungsmatte angeordnet sein. Alternativ können auch beide Aufhängungsmatten übereinander und unterhalb des Sitzpolsterelements angeordnet sein.

Das Konzept eines Entlastungselements in einer Ausnehmung eines Sitzpolsterelements, welches vertikal beweglich angeordnet ist, funktioniert auch, wenn es auf einem Sitz mit einer Sinusfeder-Unterfederung oder einer Vollschale aus Metall oder Kunststoff oder einem Sitzgestell als Stützelement verwendet wird.

Insbesondere sind die beiden Stützelemente oder ist das zumindest eine Stützelement unterhalb des Sitzpolsterelements angeordnet. Das jeweils als Aufhängungsmatte ausgebildete Stützelement bildet insbesondere eine elastische Stützhalterung für das Sitzpolsterelement mit dem darin beweglich angeordneten Entlastungselement.

Der Sitz kann eine herkömmliche Rückenlehne mit verstellbarer Rückenlehne oder eine feste Rückenlehne ohne verstellbare Rückenlehne haben. Die Erfindung ist auch für Sitze mit herkömmlichen Mechanismen zur Höhenverstellung und Längsverstellung ohne jegliche Kompromisse vorteilhaft anwendbar.

Zusammenfassend und mit anderen Worten ausgedrückt werden durch die Erfindung eine Sitzpolsteranordnung und ein Fahrzeugsitz bereitgestellt, die mit einfachen Mitteln den Maximaldruck an der Oberfläche eines Sitzpolsterelements reduzieren, die Gesamtkontaktfläche vergrößern und den durchschnittlichen Druck an der Oberfläche des Sitzpolsterelements verringern, wodurch das Sitzen auf der Sitzpolsteranordnung für einen Benutzer komfortabler ist.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht einer Sitzpolsteranordnung eines Fahrzeugsitzes nach dem Stand der Technik,
- Fig. 3:: eine perspektivische Ansicht einer erfindungsgemäßen Sitzpolsteranordnung gemäß einem ersten Ausführungsbeispiel,
- Fig. 4:: eine Draufsicht auf die Sitzpolsteranordnung gemäß dem ersten Ausführungsbeispiel,
- Fig. 5:: eine perspektivische Ansicht eines erfindungsgemäßen Stützelements,
- Fig. 6:: eine Draufsicht auf das Stützelement aus Fig. 5,
- Fig. 7:: eine Draufansicht eines weiteren Beispiels für ein erfindungsgemäßes Stützelement,
- Fig. 8:: eine Draufsicht auf eine erfindungsgemäße Sitzpolsteranordnung gemäß einem zweiten Ausführungsbeispiel,
- Fig. 9:: eine perspektivische Ansicht eines Federbodens als erste Aufhängungsmatte eines dritten Ausführungsbeispiels der Sitzpolsteranordnung,
- Fig. 10:: eine perspektivische Ansicht des Federbodens und einer Membran als eine zweite Aufhängungsmatte des dritten Ausführungsbeispiels,
- Fig. 11:: eine perspektivische Ansicht des Federbodens und der Membran des dritten Ausführungsbeispiels,
- Fig. 12:: eine perspektivische Ansicht des Federbodens, der Membran und eines Entlastungselements des dritten Ausführungsbeispiels,
- Fig. 13:: eine perspektivische Ansicht eines Sitzpolsterelements und des Entlastungselements des dritten Ausführungsbeispiels,
- Fig. 14:: eine Draufsicht auf die Sitzpolsteranordnung des dritten Ausführungsbeispiels,
- Fig. 15:: eine Schnittdarstellung der Sitzpolsteranordnung des dritten Ausführungsbeispiels im Bereich des Entlastungselements vor einer Benutzung der Sitzfläche des Sitzpolsterelements, und
- Fig. 16:: eine Schnittdarstellung der Sitzpolsteranordnung des dritten Ausführungsbeispiels im Bereich des Entlastungselements während einer Benutzung der Sitzfläche des Sitzpolsterelements.

Einander entsprechende Teile sind in allen Figuren mit den gleichen Bezugszeichen versehen.

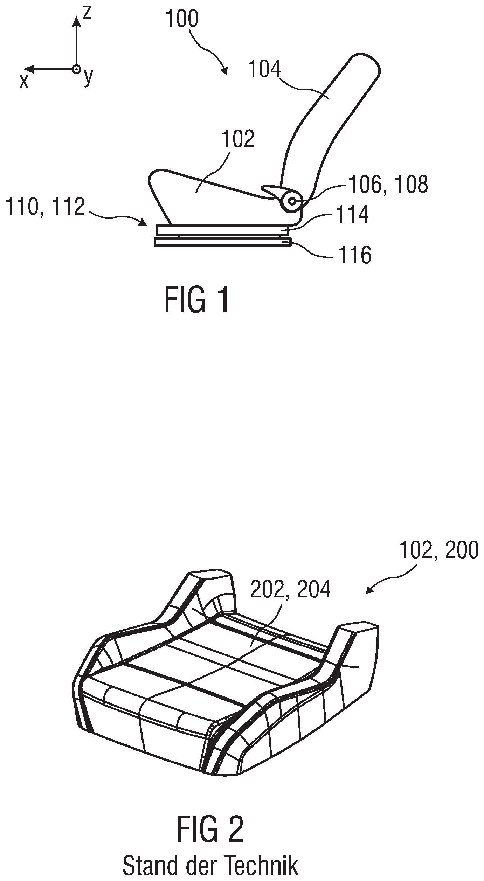

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten, beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Eine in der Figur 2 zum Stand der Technik schematisch dargestellte Sitzpolsteranordnung 200, die zum Sitzteil 102 eines nicht dargestellten Fahrzeugsitzes 100 gehört, umfasst ein Sitzpolsterelement 202 mit einer zumindest annähernd horizontalen Sitzfläche 204.

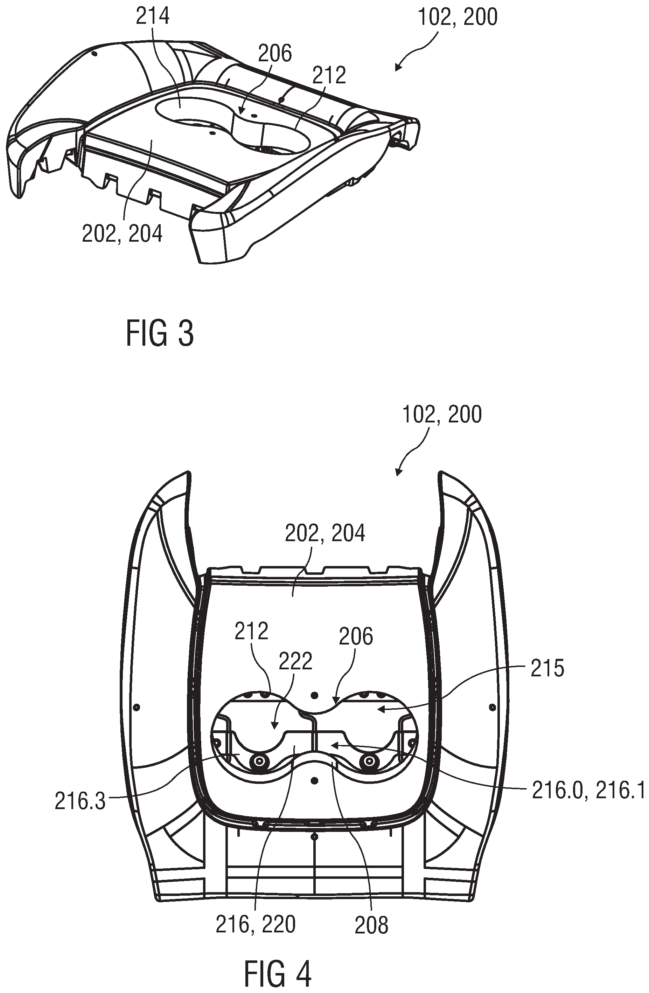

Die Figuren 3 und 4 zeigen ein erstes Ausführungsbeispiel einer erfindungsgemäßen Sitzpolsteranordnung 200, die zum Sitzteil 102 eines Fahrzeugsitzes 100 gehört. Wie aus dem Stand der Technik bekannt, umfasst auch dieses Sitzpolsterelement 202 eine zumindest annähernd horizontale Sitzfläche 204.

Das Sitzpolsterelement 202 weist eine in der Sitzfläche 204 angeordnete Ausnehmung 206 auf. Die Ausnehmung 206 durchdringt das Sitzpolsterelement 202 in der Vertikalrichtung z vollständig. Die Ausnehmung 206 des Sitzpolsterelements 202 weist beispielsweise eine 8-förmige, schleifenförmige oder dergleichen, Außenkontur 212 optional mit geraden Seitenflanken 214 auf.

Darüber hinaus umfasst die Sitzpolsteranordnung 200 eine Stützanordnung 215. Die Stützanordnung 215 der Sitzpolsteranordnung 200 ist insbesondere mehrteilig ausgebildet.

Die Stützanordnung 215 umfasst mindestens ein Stützelement 216 und mindestens ein Entlastungselement 210. Das mindestens eine Stützelement 216 ist als eine Aufhängungsmatte 216.0 ausgebildet, die unterhalb des Sitzpolsterelements 202 angeordnet ist. Insbesondere ist die Aufhängungsmatte 216.0 derart elastisch oder flexibel ausgebildet, dass das Sitzpolsterelement 202 im Ganzen relativ bewegbar, insbesondere nachgiebig, elastisch oder federnd, ausgebildet ist. Hierzu ist die jeweilige Aufhängungsmatte 216.0 als eine elastische Stützhalterung 216.3 ausgebildet.

Das mindestens eine Entlastungselement 210 ist insbesondere ergonomisch geformt. Das mindestens eine Entlastungselement 210 ist zudem zumindest in Vertikalrichtung z beweglich in der mindestens einen Ausnehmung 206 des Sitzpolsterelements 202 gelagert.

Das unter dem Sitzpolsterelement 202 angeordnete, zumindest eine Stützelement 216 ist flächig ausgebildet. Das zumindest eine Stützelement 216 erstreckt sich annähernd horizontal.

Figur 4 zeigt ein erstes Beispiel für das mindestens eine Stützelement 216, das als eine erste Aufhängungsmatte 216.1 ausgebildet ist Die erste Aufhängungsmatte 216.1 kann beispielsweise als ein horizontal aufgespannter Federboden 220 ausgeführt sein, welcher das Sitzpolsterelement 202 in der Vertikalrichtung z stützt und welcher die elastische Stützhalterung 216.3 bildet. Unterhalb der Ausnehmung 206 des Sitzpolsterelements 202 kann das Stützelement 216 Aussparungen 222 aufweisen.

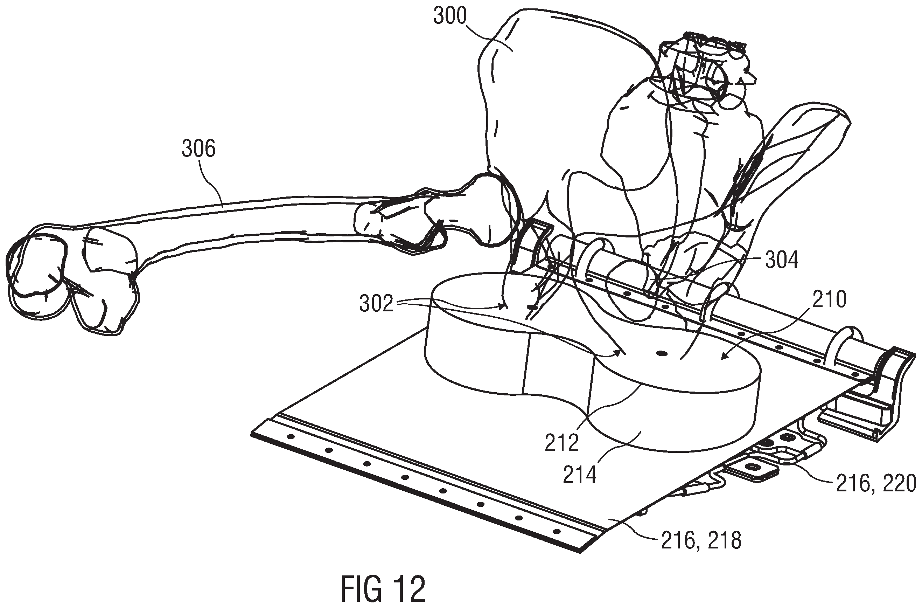

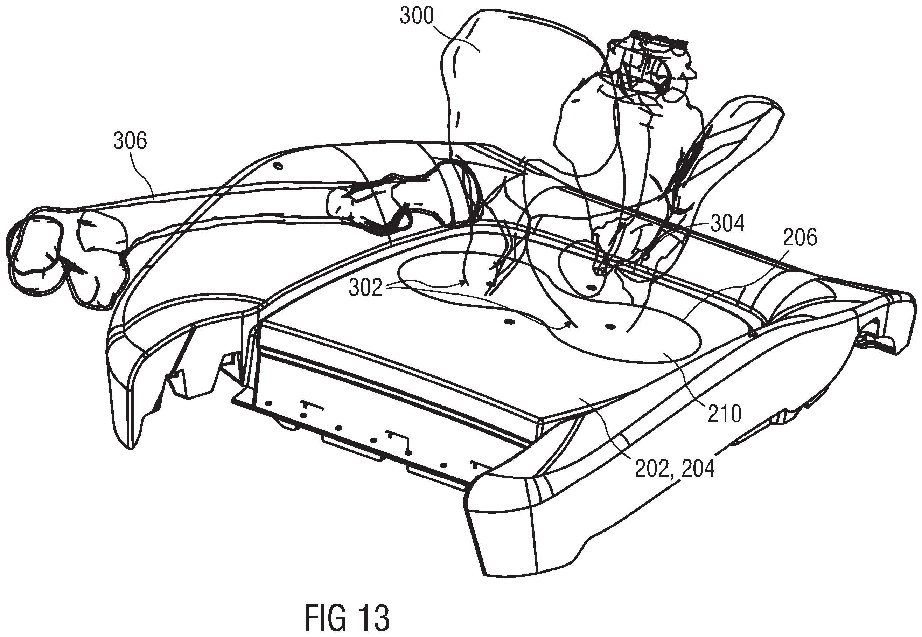

Die Stützanordnung 215 der Sitzpolsteranordnung 200 umfasst außerdem das mindestens eine, insbesondere ergonomisch geformte, Entlastungselement 210, das in Vertikalrichtung z beweglich in der mindestens einen Ausnehmung 206 des Sitzpolsterelements 202 gelagert ist und in Figur 12 dargestellt ist. Beispielsweise kann das Entlastungselement 210 eine 8-förmige Außenkontur 212 aufweisen, die zur Ausnehmung 206 korrespondierend gestaltet ist, so dass das Entlastungselement 210 exakt in die Ausnehmung 206 passt, wie in Figur 13 dargestellt.

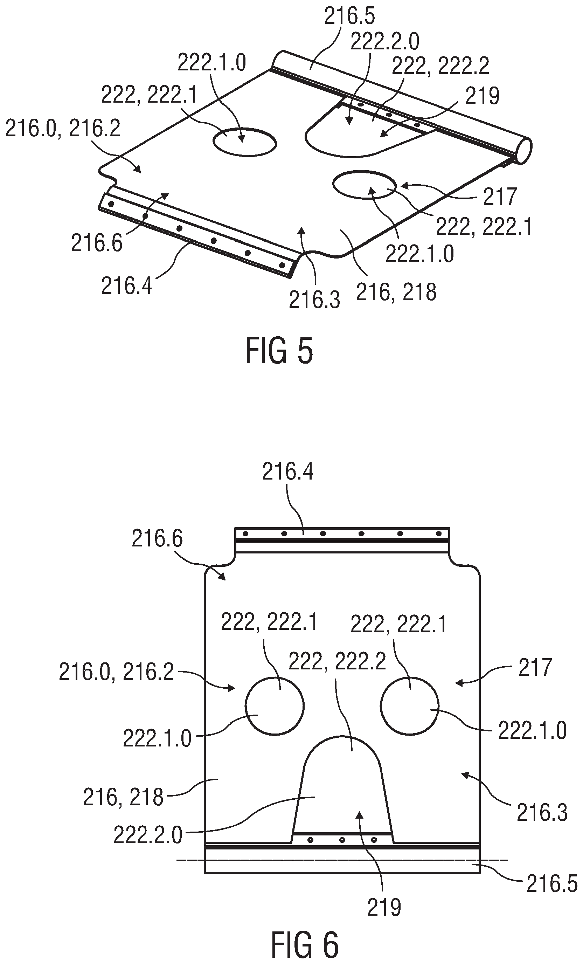

Die Figuren 5 bis 7 zeigen ein zweites Beispiel für das Stützelement 216, das als eine zweite Aufhängungsmatte 216.2 ausgebildet ist, die eine elastische Stützhalterung 216.3 bildet. Die zweite Aufhängungsmatte 216.2 ist insbesondere als eine Membran 218 aus einem flexiblen, flächigen Material ausgeführt.

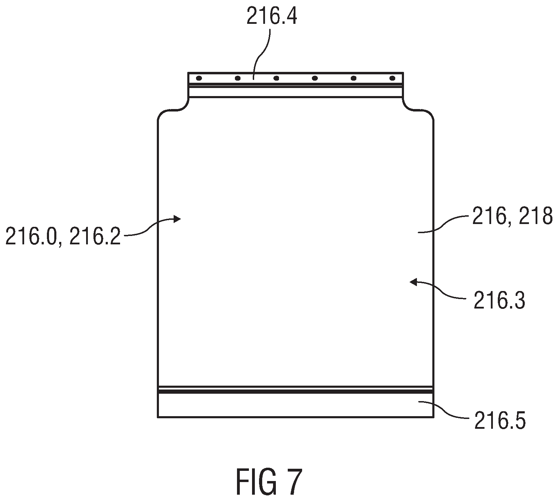

Die unter dem Sitzpolsterelement 202 angeordnete, zweite Aufhängungsmatte 216.2 ist insbesondere flächig ausgebildet und erstreckt sich insbesondere annähernd horizontal. Die zweite Aufhängungsmatte 216.2 kann beispielsweise als eine horizontal aufgespannte Membran 218 mit Aussparungen 222 (dargestellt in Figuren 5 und 6) und ohne Aussparungen 222 (dargestellt in Figur 7) ausgeführt sein. Die zweite Aufhängungsmatte 216.2 stützt das Sitzpolsterelement 202 in der Vertikalrichtung z. Unterhalb der Ausnehmung 206 des Sitzpolsterelements 202 kann die zweite Aufhängungsmatte 216.2 Aussparungen 222 aufweisen, wie in Figuren 5 und 6 dargestellt.

Die zweite Aufhängungsmatte 216.2, insbesondere die Membran 218, kann beispielsweise drei Aussparungen 222 aufweisen, die unterhalb der (nicht dargestellten) Sitzbeinhöcker und unterhalb des (nicht dargestellten) Steißbeins eines Benutzers angeordnet sind, wenn die Membran 218 unter dem Sitzpolsterelement 202 der Sitzpolsteranordnung 200 angeordnet ist.

Die zweite Aufhängungsmatte 216.2 kann beispielsweise als eine flächig aufgespannte, flexible Membran 218, insbesondere eine flexible Textilmatte, eine flexible Kunststoffmatte oder dergleichen, ausgebildet sein.

Beispielsweise kann das Stützelement 216, zum Beispiel die zweite Aufhängungsmatte 216.2, in einem Sitzbeinhöckerbereich 217 zumindest eine erste Aussparung 222.1 und in einem Steißbeinbereich 219 zumindest eine zweite Aussparung 222.2 aufweisen.

Beispielsweise kann die erste Aussparung 222.1 mindestens eine Durchgangsöffnung 222.1.0, insbesondere eine 8-förmige Durchgangsöffnung 222.1.0 (nicht dargestellt) oder zwei kreisförmige, voneinander beabstandete Durchgangsöffnungen 222.1.0 (dargestellt in Figuren 5 und 6), umfassen.

Die zweite Aussparung 222.2 kann beispielsweise als ein kegelförmiger, dreiecksförmiger, u-förmiger oder halbkreisförmiger Ausschnitt 222.2.0, als ein Langloch oder dergleichen ausgebildet sein. Insbesondere kann die zweite Aussparung 222.2 senkrecht zu den beiden Durchgangsöffnungen 222.1.0 ausgebildet sein. Auch kann die zweite Aussparung 222.2 mittig zu einer Längsachse der zweiten Aufhängungsmatte 216.2 angeordnet sein. Dabei können die beiden Durchgangsöffnungen 222.1.0 beabstandet zu der Längsachse der zweiten Aufhängungsmatte 216.2 und in einer Linie angeordnet sein.

Darüber hinaus kann die jeweilige Aufhängungsmatte 216.0 eine erste, zum Beispiel eine vordere, Befestigungseinheit 216.4 und eine zweite, zum Beispiel eine hintere, Befestigungseinheit 216.5 sowie einen dazwischenliegenden flexiblen Stützbereich 216.6 umfassen. Beispielsweise kann die jeweilige Befestigungseinheit 216.4, 216.5 sich jeweils über eine Breite der Aufhängungsmatte 216.0 erstrecken.

Die beiden ersten Aussparungen 222.1, die im Sitzbeinhöckerbereich 217 unterhalb der Sitzbeinhöcker des Benutzers angeordnet sind, sind gleichzeitig unter der Ausnehmung 206 angeordnet, die in der Sitzfläche 204 des Sitzpolsterelements 202 zur Aufnahme des Entlastungselements 210 (dargestellt in Figur 12) angeordnet ist und die beispielsweise eine 8-förmige oder schleifenförmige Außenkontur 212 und eine gerade Innenwandung 208 aufweist, wie in Figur 4 gezeigt.

Figur 4 zeigt ein erstes Ausführungsbeispiel der erfindungsgemäßen Sitzpolsteranordnung 200 mit der ersten Aufhängungsmatte 216.1 als Stützelement 216, das unterhalb des Sitzpolsterelements 202 angeordnet ist.

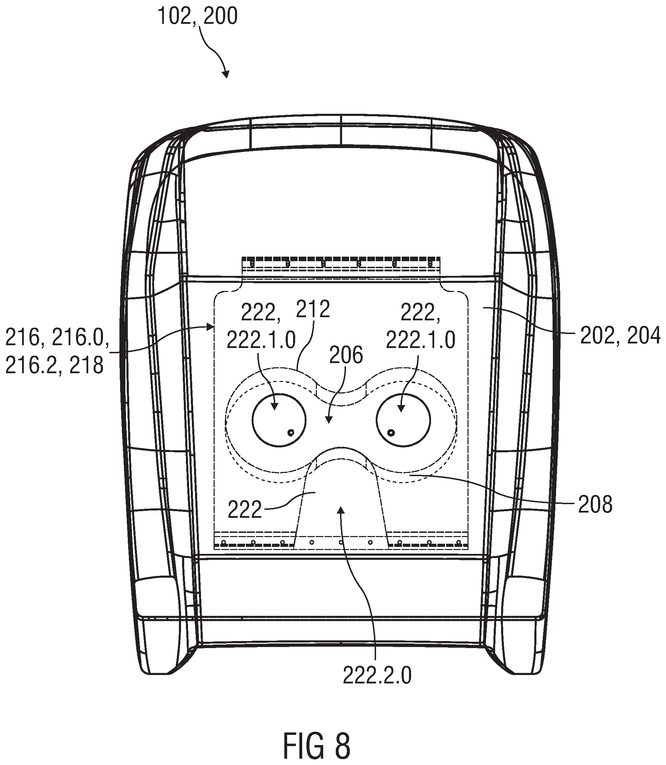

Figur 8 zeigt ein zweites Ausführungsbeispiel der erfindungsgemäßen Sitzpolsteranordnung 200 mit der zweiten Aufhängungsmatte 216.2 als Stützelement 216, das unterhalb des Sitzpolsterelements 202 angeordnet ist. Die Durchgangsöffnungen 222.1.0 der zweiten Aufhängungsmatte 216.2 sind insbesondere kleiner als die Ausnehmung 206 des Sitzpolsterelements 202 ausgebildet.

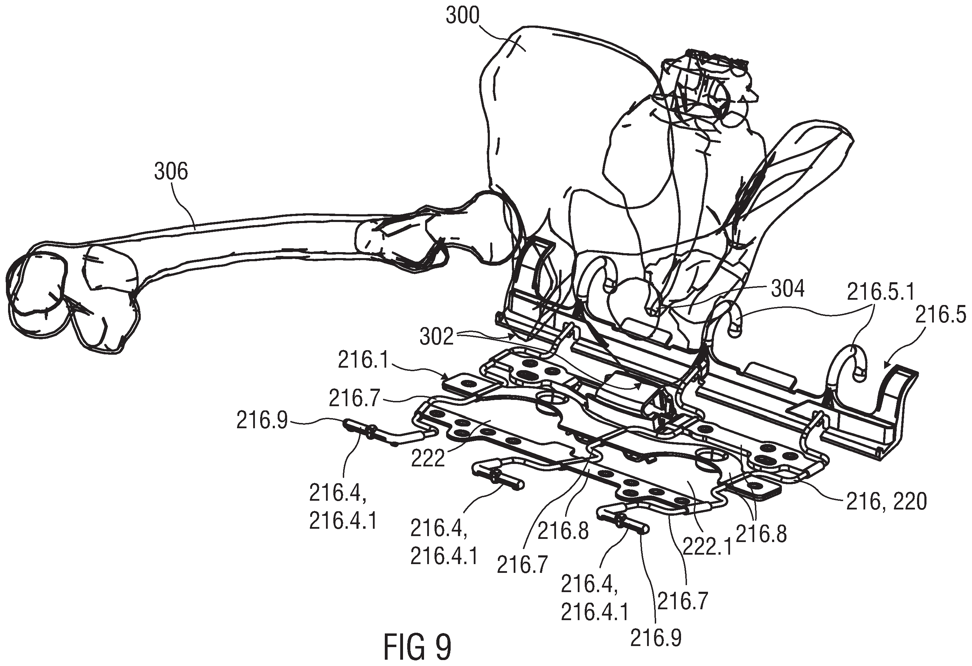

Alternativ kann ein drittes Ausführungsbeispiel der erfindungsgemäßen Sitzpolsteranordnung 200 beide Aufhängungsmatten 216.1, 216.2 als Stützelemente 216 umfassen, die unterhalb des Sitzpolsterelements 202 angeordnet sind, wie beispielhaft in Figur 9 dargestellt, wobei das Sitzpolsterelement 202 und das Entlastungselement 210 nicht dargestellt sind.

Die Figuren 9 bis 13 zeigen stufenweise von unten nach oben den Aufbau des dritten Ausführungsbeispiels der erfindungsgemäßen Sitzpolsteranordnung 200, jeweils im räumlichen Zusammenhang mit anatomischen Merkmalen, namentlich dem Becken 300 mit den Sitzhöckern 302 und dem Steißbein 304 sowie einem Oberschenkelknochen 306 eines Benutzers, der auf der Sitzpolsteranordnung 200 Platz genommen hat.

Das unterste Element der Sitzpolsteranordnung 200 ist das in Figur 9 gezeigte Stützelement 216 in Gestalt des Federbodens 220 als erste Aufhängungsmatte 216.1, die unterhalb der Sitzbeinhöcker 302 erste Aussparungen 222.1 aufweist.

Die erste Aufhängungsmatte 216.1 kann beispielsweise eine Anzahl von, insbesondere gebogenen, Längsfederdrähten 216.7 umfassen, die mittels Querverbindern 216.8 miteinander verbunden sind.

Die zweite, insbesondere hintere, Befestigungseinheit 216.5 kann beispielsweise eine Anzahl von Befestigungshaken 216.5.1 umfassen. Hierdurch ist eine einfache Montage und Demontage der ersten Aufhängungsmatte 216.1 ermöglicht.

Als erste Befestigungseinheit 216.4 kann beispielsweise eine Anzahl von Befestigungsabschnitten 216.4.1 vorgesehen sein. Die Befestigungsabschnitte 216.4.1 können beispielsweise durch umgebogene freie Enden der Längsfederdrähte 216.7 gebildet sein. Die umgebogenen freien Enden sind beispielsweise als Befestigungshaken 216.9 ausgebildet, zum Beispiel zum Einhängen.

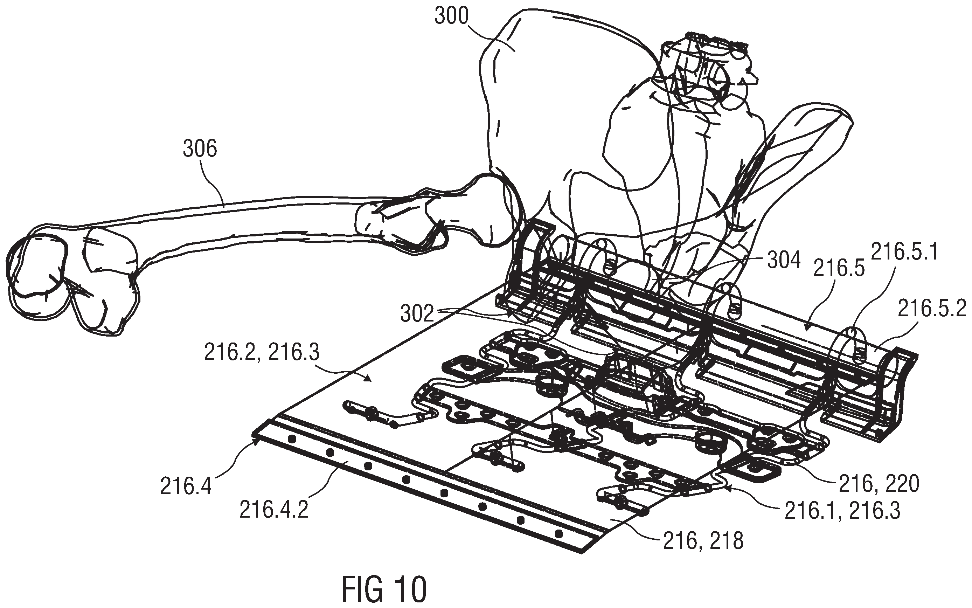

Darüber kann, wie Figur 10 zeigt, als ein weiteres Stützelement 216 die zweite Aufhängungsmatte 216.2 in Gestalt der Membran 218, wie sie bereits in den Figu-ren 5 und 6 dargestellt ist, angeordnet sein. Die zweite Aufhängungsmatte 216.2 kann beispielsweise als vordere Befestigungseinheit 216.4 eine Befestigungsleiste 216.4.2 mit einer Anzahl von Befestigungsöffnungen, beispielsweise zur Aufnahme von Befestigungselementen, wie Klemmen, Nieten, Schrauben oder dergleichen, umfassen.

Als hintere Befestigungseinheit 216.5 kann die zweite Aufhängungsmatte 216.2 beispielsweise eine Befestigungsstange 216.5.2 umfassen, die beispielsweise in die Befestigungshaken 215.5.1 der ersten Aufhängungsmatte 216.1 einhängbar ist.

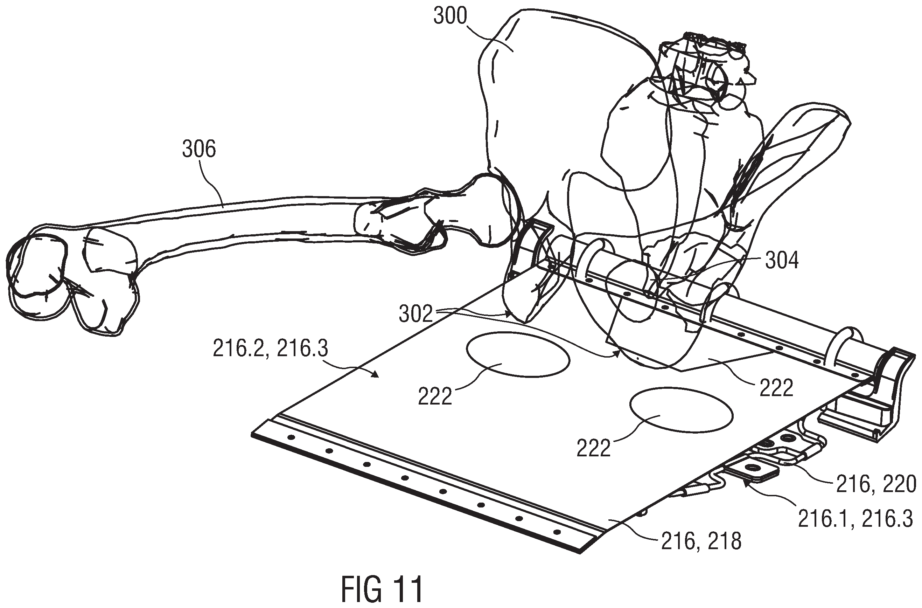

Figur 11 zeigt dieselbe Ansicht wie Figur 10, mit dem Unterschied, dass in Figur 11 die Membran 218 nicht durchsichtig dargestellt ist, so dass die optionalen Aussparungen 222 der zweiten Aufhängungsmatte 216.2 besser erkennbar sind.

Figur 12 fügt den bisherigen Darstellungen das Entlastungselement 210 ohne das Sitzpolsterelement 202 hinzu. Das Entlastungselement 210 ist auf der Membran 218 angeordnet und weist beispielsweise eine 8-förmige, insbesondere in Form einer liegenden Acht, oder eine schleifenförmige Außenkontur 212 und gerade Seitenflanken 214 auf. Optional können die Seitenflanken 214 schräg oder verjüngend ausgebildet sein (nicht näher dargestellt). Die Sitzbeinhöcker 302 des Benutzers befinden sich genau über dem 8-förmigen oder schleifenförmigen Entlastungselement 210.

Figur 13 zeigt schließlich, wie das Entlastungselement 210 in der korrespondierenden, beispielsweise 8-förmigen, Ausnehmung 206 der Sitzfläche 204 des Sitzpolsterelements 202 angeordnet ist.

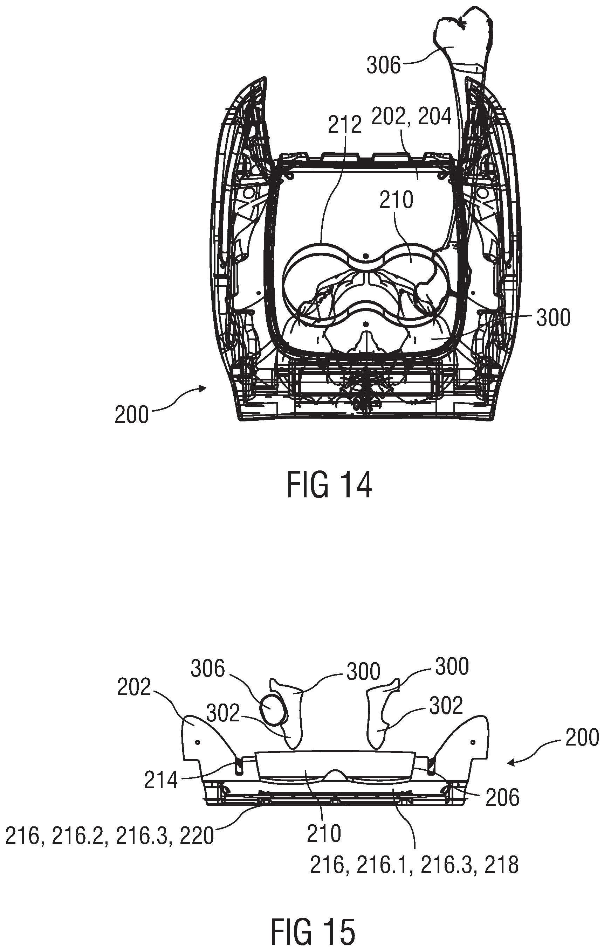

Die Figuren 14 bis 16 zeigen jeweils in einer Draufsicht und in einer Querschnittsdarstellung entlang der in der Draufsicht dargestellten Linie, wie die erfindungsgemäße Sitzpolsteranordnung 200 funktioniert.

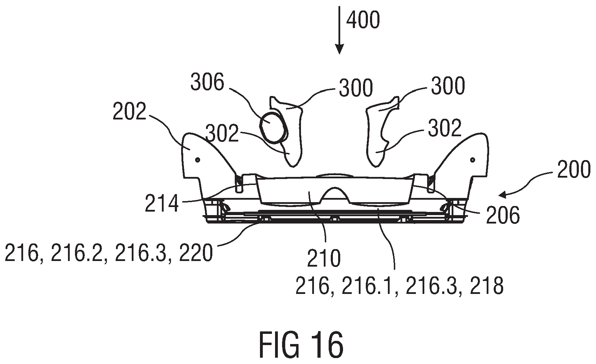

Insbesondere den Querschnittsdarstellungen der Figuren 15 und 16 kann gut entnommen werden, dass die Ausnehmung 206 der Sitzfläche 204 des Sitzpolsterelements 202 eine gerade Innenwandung 208 (dargestellt in Figuren 2 und 8) und das darin angeordnete Entlastungselement 210 schräge Seitenflanken 214 aufweisen. In Figur 15 ist das Entlastungselement 210 unbelastet. Demgegenüber ist das Entlastungselement 210 durch das Gewicht eines Benutzers belastet, wodurch es sich in der Ausnehmung 206 gemäß Pfeil 400 vertikal abwärts verschoben hat, wie in Figur 16 gezeigt. Durch diese Ausweichbewegung des Entlastungselements 210 wird erreicht, dass bei der Benutzung der Sitzpolsteranordnung 200 durch einen darauf sitzenden Benutzer der Maximaldruck an der Oberfläche reduziert, die Gesamtkontaktfläche vergrößert und der durchschnittliche Druck an der Oberfläche des Sitzpolsterelements 202 verringert wird.

Hierzu sind die unterhalb des Sitzpolsterelements 202 und des Entlastungselements 210 angeordneten Stützelemente 216, insbesondere die erste Aufhängungsmatte 216.1 und/oder die zweite Aufhängungsmatte 216.2, zusätzlich als elastische Stützhalterungen 216.3 ausgebildet, wie dies zuvor beschrieben wurde.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 200: Sitzpolsteranordnung
- 202: Sitzpolsterelement
- 204: Sitzfläche
- 206: Ausnehmung
- 208: Innenwandung
- 210: Entlastungselement
- 212: Außenkontur
- 214: Seitenflanke
- 215: Stützanordnung
- 216: Stützelement
- 216.0: Aufhängungsmatte
- 216.1: erste Aufhängungsmatte
- 216.2: zweite Aufhängungsmatte
- 216.3: elastische Stützhalterung
- 216.4: erste Befestigungseinheit
- 216.4.1: Befestigungsabschnitt
- 216.4.2: Befestigungsleiste
- 216.5: zweite Befestigungseinheit
- 216.5.1: Befestigungshaken
- 216.5.2: Befestigungsstange
- 216.6: flexibler Stützbereich
- 216.7: Längsfederdraht
- 216.8: Querverbinder
- 216.9: Befestigungshaken

- 217: Sitzbeinhöckerbereich
- 218: Membran
- 219: Steißbeinbereich
- 220: Federboden
- 222: Aussparung
- 222.1: erste Aussparung
- 222.1.0: Durchgangsöffnung
- 222.2: zweite Aussparung
- 222.2.0: Ausschnitt

- 300: Becken
- 302: Sitzbeinhöcker
- 304: Steißbein
- 306: Oberschenkelknochen

- 400: Pfeil

- x: Längsrichtung
- y: Querrichtung
- z: Vertikalrichtung

## Patentansprüche

1. Sitzpolsteranordnung (200), insbesondere für einen Fahrzeugsitz (100), zumindest umfassend:
- ein Sitzpolsterelement (202) mit einer zumindest annähernd horizontalen Sitzfläche (204), das mindestens eine in der Sitzfläche (204) angeordnete Ausnehmung (206) aufweist, und
- eine Stützanordnung (215), wobei
die Stützanordnung (215) mindestens ein Stützelement (216), das als eine Aufhängungsmatte (216.0 bis 216.2) ausgebildet ist, die unterhalb des Sitzpolsterelements (202) angeordnet ist, und mindestens ein Entlastungselement (210) umfasst, das zumindest in Vertikalrichtung (z) beweglich in der mindestens einen Ausnehmung (206) des Sitzpolsterelements (202) gelagert ist.

2. Sitzpolsteranordnung (200) nach Anspruch 1,
**dadurch gekennzeichnet, dass**
sich die Ausnehmung (206) im Sitzpolsterelement (202) in der Vertikalrichtung (z) zumindest bereichsweise oder vollständig erstreckt.

3. Sitzpolsteranordnung (200) nach Anspruch 1 oder 2,
**dadurch gekennzeichnet, dass**
das mindestens eine Entlastungselement (210) in einer Draufsicht auf die Sitzfläche (204) des Sitzpolsterelements (202) eine zumindest annähernd 8-förmige oder schleifenförmige Außenkontur (212) aufweist und die Ausnehmung (206) des Sitzpolsterelements (202) eine korrespondierende, zumindest annähernd 8-förmige oder schleifenförmige Außenkontur (212) aufweist.

4. Sitzpolsteranordnung (200) nach einem der Ansprüche 1 bis 3,
**dadurch gekennzeichnet, dass**
das mindestens eine Entlastungselement (210) gerade Seitenflanken (214) und die Ausnehmung (206) des Sitzpolsterelements (202) eine korrespondierende gerade Innenwandung (208) aufweisen.

5. Sitzpolsteranordnung (200) nach einem der Ansprüche 1 bis 4,
**dadurch gekennzeichnet, dass**
das Entlastungselement (210) aus einem elastischen Kunststoffschaum gebildet ist oder ein mit einem elastischen Kunststoffschaum gefülltes Kissen oder ein mit Flüssigkeit gefülltes Kissen oder ein mit Gel gefülltes Kissen ist.

6. Sitzpolsteranordnung (200) nach einem der Ansprüche 1 bis 5,
**dadurch gekennzeichnet, dass**
das Entlastungselement (210) eine höhere Dichte oder eine niedrigere Dichte aufweist als das Sitzpolsterelement (202).

7. Sitzpolsteranordnung (200) nach einem der vorhergehenden Ansprüche,
**dadurch gekennzeichnet, dass**
die Aufhängungsmatte (216.0 bis 216.2) als ein flächiges Stützelement (216) ausgebildet ist und eine elastische Stützhalterung (216.3) für das Sitzpolsterelement (202) bildet.

8. Sitzpolsteranordnung (200) nach einem der vorhergehenden Ansprüche,
**dadurch gekennzeichnet, dass**
eine erste Aufhängungsmatte (216.1) als ein Federboden (220) ausgebildet ist.

9. Sitzpolsteranordnung (200) nach einem der vorhergehenden Ansprüche,
**dadurch gekennzeichnet, dass**
eine zweite Aufhängungsmatte (216.2) als eine flächig aufgespannte, flexible Membran (218) ausgebildet ist.

10. Sitzpolsteranordnung (200) nach einem der vorhergehenden Ansprüche,
**dadurch gekennzeichnet, dass** das jeweilige Stützelement (216) mindestens eine Aussparung (222 bis 222.2) aufweist.

11. Sitzpolsteranordnung (200) nach einem der vorhergehenden Ansprüche,
**dadurch gekennzeichnet, dass**
das Stützelement (216) im Bereich der mindestens einen Ausnehmung (206) des Sitzpolsterelements (202) die Aussparung (222 bis 222.2) aufweist.

12. Sitzpolsteranordnung (200) nach einem der vorhergehenden Ansprüche,
**dadurch gekennzeichnet, dass**
das Stützelement (216) in einem Sitzbeinhöckerbereich (217) zumindest eine erste Aussparung (222.1) und in einem Steißbeinbereich (219) zumindest eine zweite Aussparung (222.2) aufweist.

13. Sitzpolsteranordnung (200) nach einem der vorhergehenden Ansprüche,
**dadurch gekennzeichnet, dass** das Stützelement (216) eine erste Befestigungseinheit (216.4) und eine zweite Befestigungseinheit (216.5) sowie einen dazwischenliegenden flexiblen Stützbereich (216.6) umfasst.

14. Fahrzeugsitz (100) mit einem Sitzteil (102) und einer Rückenlehne (104), bei dem das Sitzteil (102) eine Sitzpolsteranordnung (200) nach einem der Ansprüche 1 bis 13 aufweist.

15. Fahrzeugsitz (100) nach Anspruch 14,
**dadurch gekennzeichnet, dass** unterhalb des Sitzpolsterelements (202) eine erste Aufhängungsmatte (216.1) und/oder eine zweite Aufhängungsmatte (216.2) angeordnet sind/ist.
